# EUROPEAN PATENT APPLICATION

(11) **EP 1 859 867 A2**
(43) Date of publication of application: **28.11.2007**
(21) Application number: 07252012.5
(22) Date of filing: 16.05.2007
(51) Int. Cl.: B01L 3/00, G01N 30/60

(54) **Microflow path system**

(30) Priority: 22.05.2006 JP 2006141896
(71) Applicant: Sony Corporation, Minato-ku Tokyo 108-0075 (JP)
(72) Inventor: Ohnishi, Michihiro, Tokyo 108-0075 (JP); Abe, Tomoteru, Tokyo 108-0075 (JP)
(74) Representative: Smith, Samuel Leonard

(57) **Abstract**

A microflow path system has a column layer of at least 0.5 mm in internal diameter. The column layer includes a hybrid-forming section and a fluid-supply promoting section arranged in a region downstream of the hybrid-forming section. The hybrid-forming section is packed with beads to provide a bead bed length of not longer than 4 mm. The fluid-supply promoting section serves to contribute to an increase in a flow rate of a fluid supply.

## Description

### CROSS REFERENCES TO RELATED APPLICATIONS

The present invention contains subject matter related to Japan Patent Application JP 2006-141896 filed with the Japan Patent Office on May 22, 2006, the entire contents of which being incorporated herein by reference.

### BACKGROUND OF THE INVENTION

### 1. Field of the Invention

This invention relates to a microflow path system permitting a high flow-rate fluid supply. More specifically, this invention is concerned with a microflow path system, which permits a high flow-rate fluid supply by preventing clogging within a microflow path and preventing a rise in internal pressure.

### 2. Description of the Related Art

In recent years, there have been increasing developments in bioassay technologies usable for gene mutation analyses, SNPs (single-base polymorphisms) analyses, gene expression frequency analyses, gene network analyses, and the like. Examples include methods making use of integrated plates commonly called "DNA chips" or "DNA microarrays" (hereinafter collectively called "DNA chips").

Sensor chip technologies represented by such DNA chips and protein chips with proteins integrated thereon are methods for determining the contents, components and effectiveness of target substances by making use of specific interactions between detecting substances (which are often called "probes) and the target substances.

Recently, there have been proposed technologies that perform specific interactions between detecting substances and target substances by using flow paths or capillaries. For example, the technology proposed in Japanese Patent Laid-open No. 2005-030906 can reduce the amount of a fluid sample, which is demanded for its analysis, by performing an analysis of the interaction in a flow path formed on a plate. The technology disclosed in Japanese Patent Laid-open No. Hei 10-170427 forms an optical detection means in a vicinity of a capillary and uses the capillary itself as a detecting cell. The technology disclosed in Japanese Patent Laid-open No. Hei 06-094722 allows an interaction to proceed in a passage of a capillary tube and detects characteristics of a flow through the passage.

Further, as applications of an interaction between substances, there have also been proposed technologies that allow hybridizations between nucleic acids to proceed in flow paths or capillary tubes. For example, Japanese Patent Laid-open No. 2005-130795 discloses a member for the analysis of a polynucleotide, which has a section for performing amplification of the polynucleotide and a porous layer with a detecting oligonucleotide immobilized thereon. Japanese Patent Laid-open No. 2004-121226 discloses a method for the analysis of a polynucleotide, in which a probe compound is immobilized on the inner wall of a flow path in a capillary tube or the like and its hybridization with the polynucleotide under testing is allowed to proceed.

### SUMMARY OF THE INVENTION

When an interaction is allowed to proceed between substances in a flow path or a narrow flow path such as a capillary as described above, a supply of a sample solution or the like may cause clogging or the like to lead to a rise in the internal pressure of the flow path. In particular, a total RNA sample collected from organism's cells tends to cause clogging when supplied, because of the existence of suspended substances other than a target nucleic acid and long-chain nucleic acids or the like not suited for the detection of hybridization.

Even when such suspended substances and long-chain nucleic acids do not exist, the formation of a hybrid or the like within the narrow flow path decreases the practical volume of the flow path, and therefore, the internal pressure of the flow path may rise likewise.

When the internal pressure of a flow path rises as mentioned above, leakage of a supplied solution, for example, a sample solution or the like takes place, resulting in a substantial loss of the solution. When a hazardous substance is contained in a sample solution or the like, the leakage of the solution leads to a problem in that the safety is reduced.

There is a primary need for the present invention, to provide a microflow path system, which permits a high flow-rate fluid supply, by preventing clogging within a microflow path, preventing a rise in internal pressure and preventing leakage of a passed fluid.

To resolve the above-described problems, the present inventors conducted extensive research for suitable conditions such as the form of a column layer and pretreatment of a sample solution. As a result, the present inventors have developed a novel microflow path which permits a high flow-rate fluid supply by preventing clogging in a microflow path and preventing an increase in internal pressure.

According to an embodiment of the present invention, a microflow path system having a column layer of 0.5 mm or greater in inner diameter is provided. The setting of the inner diameter of the column layer at 0.5 mm or greater is to prevent clogging by a solution to be passed. This column layer includes a hybrid-forming section packed with beads and a fluid-supply promoting section arranged in a region downstream of the hybrid-forming section to contribute to an increase in a flow rate of a fluid supply.

The hybrid-forming section is packed with the beads to provide a bead bed length of not longer than 4 mm, preferably not longer than 2 mm. This bead bed length is to make the column length shorter, preventing a rise in the internal pressure of the flow path.

Preferably, a sample fluid filtered through a filter can be supplied. The filter may desirably have a pore size of not greater than 0.65 µm, with a pore size of not greater than 0.1 µm being preferred. This filtration is to remove suspended substances and the like.

The fluid-supply promoting section in the column layer of the microflow path system according to an embodiment of the present invention can be packed with perfusion chromatography particles. The microflow path system according to an embodiment of the present invention may further include a device configured to perform depressurization on a downstream of the fluid-supply promoting section.

The hybrid-forming section in the column layer of the microflow path system according to an embodiment of the present invention may function as a field to allow hybridization to proceed between a probe nucleic acid and a target nucleic acid. As a nucleic acid to be immobilized on the beads which are to be packed in the hybrid-forming section, either the probe nucleic acid or the target nuclei acid can be freely selected.

When the nucleic acid is immobilized on the beads, a linker having a same base sequence may be interposed. For example, by providing poly(T) as a linker and complementarily binding the poly(T) and an mRNA, which has a poly(A) tail extension and is contained in a total RNA sample, each other, the mRNA as a target nucleic acid can be immobilized on the beads. In this state, a solution which contains a probe nucleic acid capable of complementarily bonding with the mRNA can then be supplied into the microflow path system. As a consequence, hybridization is allowed to proceed between the mRNA as the target nucleic acid and the probe nucleic acid in the hybrid-forming section.

Advanced labeling of the probe nucleic acid with a fluorescent substance, radioactive substance or the like, which can be used for the detection of the hybridization, makes it possible to detect the hybridization by capturing optical information or radiography information available from the labeling substance.

Certain technical terms as used in the present invention will hereinafter be defined. The term "base sequence" means two or more bases polymerized together. The term "linker" means a nucleic acid, which has a predetermined sequence and is useful for holding a nucleic acid on beads. The term "target nucleic acid" means a nucleic acid which forms a complementary chain with a probe nucleic acid. The term "probe nucleic acid" means a nucleic acid capable of providing useful information for the detection of hybridization, and as an example, a single-stranded nucleic acid labeled with a fluorescent substance or a single-stranded nucleic acid labeled with a radioactive substance can be mentioned. Hybridization can be detected by detecting excited fluorescence in the former example or by detecting radiation in the latter example.

The term "poly" means a nucleic acid molecule having a base sequence composing of two or more bases polymerized together. The term "poly(T)" means a nucleic acid molecule having a base sequence composing of two or more bases thymine (T) bases polymerized together. The term "poly(A) tail" means a chain of adeninosine, which is added to the 3' end of an mRNA.

According to an embodiment of the present invention, it is possible to avoid leakage of a fluid, which is to be passed, by preventing clogging within a microflow path and preventing a rise in the internal pressure of the microflow path. The present invention, therefore, safely permits a high flow-rate fluid supply with good reaction efficiency.

### BRIEF DESCRIPTION OF THE DRAWINGS

FIG. 1 is a schematic view illustrating a preferred embodiment of a microflow path system;
FIG. 2 is a view schematically illustrating one example of the structure of a substance on a surface of each of beads packed in a hybrid-forming section;
FIG. 3 is a view schematically showing the manner of hybridization between a probe nucleic acid held on a bead and a target nucleic acid;
FIG. 4 is a view schematically depicting another example, which is different from the example of FIG. 2, of the structure of a substance on a surface of each of beads packed in the hybrid-forming section;
FIG. 5 is a view schematically showing the manner of complementary bonding between a linker held on a bead and a target nucleic acid;
FIG. 6 is a view schematically showing the manner of hybridization between a target nucleic acid, which is in a state of being held on the bead via the linker, and a probe nucleic acid;
FIGS. 7A through 7F show illustrative steps of an assay making use of a microflow path according to an embodiment of the present invention;
FIG. 8 is a graph as a substitute for drawing, and shows the results of a fluorometric measurement in the case of a 4-mm poly(dT) bead bed length in Example 1; and
FIG. 9 is a graph as a substitute for drawing, and shows the results of a fluorometric measurement in the case of a 2-mm poly(dT) bead bed length in Example 1.

### DETAILED DESCRIPTION OF THE PREFERRED EMBODIMENTS

With reference to the drawings, a description will hereinafter be made about preferred embodiments for practicing the present invention. It is to be noted that the embodiments to be described hereinafter merely illustrate examples of some representative embodiments of the present invention and the scope of the present invention shall not be narrowly interpreted by the

### preferred embodiments.

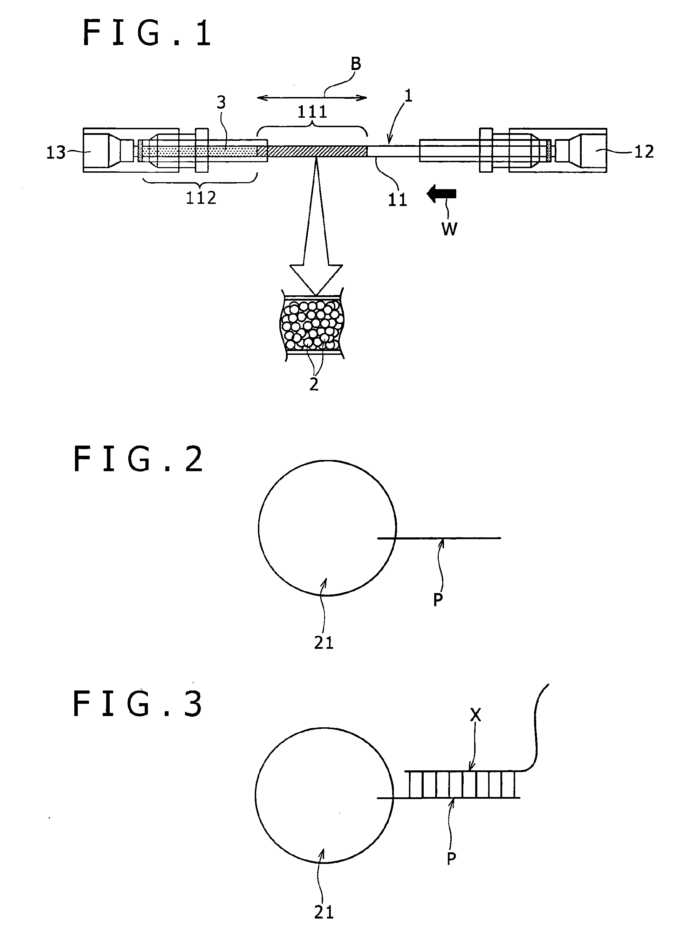

Referring first to FIG. 1, one example of a preferred embodiment of the microflow path system will be described.

Roughly speaking, the microflow system designated at numeral 1 in FIG. 1 is constructed of a capillary 11, which serves as a flow path for a sample solution and has a diameter of 0.5 mm or so, an inlet portion 12 formed at one end of the capillary 11, and an outlet portion 13 formed at an opposite end of the capillary 11. It is to be noted that arrow W shown in FIG. 1 indicates the direction of a flow of the sample solution or the like.

The illustrated microflow path system 1 is provided, inside a part of the capillary 11 at a location proximal to the inlet portion 12, with a hybrid-forming section 111 of the construction that a number of beads 2 of microdiameters are packed. This hybrid-forming section 111 functions as a section (region) in which a desired interaction such as hybridization is allowed to proceed.

A bead bed length B of the beads 2 packed in the hybrid-forming section 111 may desirably be set at 4 mm or shorter, with 2 mm or shorter being more preferred. In general, the longer the bead bed length B, the higher the internal pressure of the microflow path. In the microflow path system according to an embodiment of the present invention, the bead bed length B of the hybrid-forming section 111 is hence dimensioned short to prevent a rise in the internal pressure of the microflow path.

A fluid-supply promoting section 112 is arranged on a downstream side of the hybrid-forming section 111 (in other words, on the side of the outlet portion 13). This fluid-supply promoting section 112 has a role to accelerate the flow rate of a supply of a sample solution, washing buffer solution or the like to be supplied toward the hybrid-forming section 111. No particular limitation is imposed on particles 3 packed in the fluid-supply promoting section 112, insofar as they have a function to promote a fluid supply. As a preferred example, however, perfusion chromatography particles can be packed.

These perfusion chromatography particles typically have large pores called "through pores" and also small pores called "diffusive pores". Owing to this structure, molecules dissolved in a buffer solution are allowed to pass through the through pores, and are carried to all corners of the diffusive pores. As a consequence, a large area of contact can be established between the molecules and functional groups on the surfaces of the filler and the distances between the flow of the buffer and the functional groups become very small (not greater than 1 µm) irrespective of the particle size of the filler. The fluid can, therefore, be supplied at high flow rate and under low pressure.

In addition to the promotion of a fluid supply, the arrangement of the fluid-supply promoting section 112 is also expected to bring about advantageous effects to be described hereinafter. In general, various members such as nuts for the connection with external pumps or the like are often provided at capillary portions adjacent to the inlet portion 12 and outlet portion 13. Accordingly, it becomes difficult to detect or measure if the hybrid-forming section 111 is provided in these portions. The arrangement of the fluid-supply promoting section 112 on the downstream side of the hybrid-forming section 111, however, makes it possible to arrange the hybrid-forming section 111, which is a target of a detection or measurement, at or around a center of the flow path system 1, thereby bringing about an advantage that the detection or measurement can be facilitated.

Further, selection of perfusion chromatography particles of an adequate type makes it possible to have any surplus substances and hazardous substance (for example, radioactive substance) adsorbed and trapped to prevent their discharge to the outside. Accordingly, the selection of such particles as the particles 3 can also bring about a merit that the solution passed through the microflow path system 1 can be discarded as is.

When supplying a sample solution into the microflow path system 1 according to an embodiment of the present invention, the sample solution can be supplied as is. It is, however, more preferred to supply the sample solution into the microflow path system 1 subsequent to its filtration. This filtration is intended to remove suspended substances and the like. If suspended substances and the like in a sample solution are filtered out in advance, the microflow path 1 can be prevented from clogging.

A filter for use in the filtration may desirably have a pore size of 0.65 µm or smaller, with 0.1 µm or smaller being more preferred, for the removal of suspended substances and long-chain nucleic acids. To improve the precision of filtration, centrifugation can be conducted as desired before the filtration.

In the microflow path system 1 according to an embodiment of the present invention, depressurization can be performed on a downstream of the fluid-supply promoting section 112. By a fluid supply from an upstream, a pressure generally builds up on an upper side of the hybrid-forming section 111. By keeping the downstream side under a negative pressure, the flow of the fluid through the microflow path system 1 can be improved.

Describing one example of the manner of depressurization, the outlet side can be maintained under a negative pressure by connecting a syringe or the like to the outlet portion 13 and pulling the plunger of the syringe although such a syringe or the like is not shown in the drawing.

With reference to FIG. 2, a description will be made about one example of the structure of a substance on a surface of each of beads 21 packed in the hybrid-forming section 111.

The beads 21 are small microbeads made of a material such as polystyrene. The surfaces of these beads 21 are equipped with a structure suited for chemically binding nucleic acid molecules at one ends thereof.

These beads 21 are provided with molecules P of a probe nucleic acid (which will hereinafter be simply called "the probe nucleic acid P") bound on the surfaces of the beads 21, for example, via avidin-biotin bonds or through a coupling reaction (for example, a diazo coupling reaction). In this state, the beads 21 are packed in the hybrid-forming section of the microflow path system 1. In the hybrid-forming section 111, the probe nucleic acid P is ready for hybridization while being held on the beads 21, and undergoes hybridization with molecules X of a complementary nucleic acid (which will hereinafter be simply called "the target nucleic acid X") in a sample solution supplied into the hybrid-forming section 111. The manner of hybridization is illustrated in FIG. 3.

In FIG. 3, there is schematically illustrated a state that the target nucleic acid X has hybridized with a single-stranded portion of the probe nucleic acid P held on the bead 21 to form a double-stranded portion. Although not shown in these drawings, the advance labeling of the probe nucleic acid P or the target nucleic acid X with a fluorescent substance or radioactive substance, which can be used for the detection of the hybridization, makes it possible to detect the hybridization by capturing optical information or radiology information available from the labeling substance.

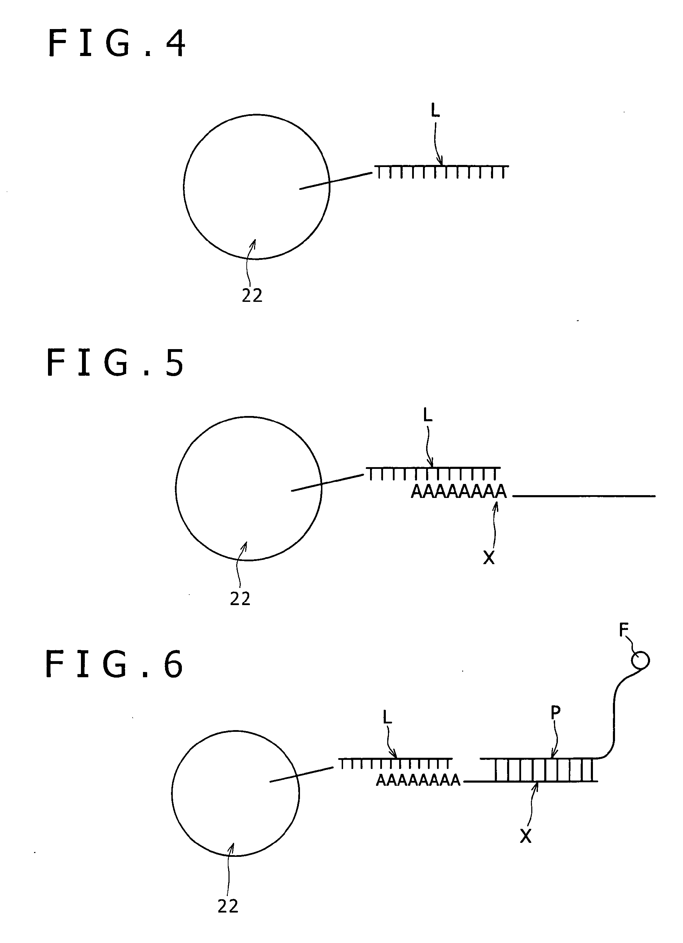

Referring next to FIG. 4, a description will be made of another example, which is different from the example of FIG. 2, of the structure of a substance on a surface of each of beads 22 packed in the hybrid-forming section 111.

The beads 22 are provided with molecules L of a linker (which will hereinafter be simply called "the linker L"), which is a nucleic acid bound on the surfaces of the beads 22, for example, via avidin-biotin bonds or through a coupling reaction (for example, a diazo coupling reaction). No particular limitation is imposed on the linker L insofar as it contains a base sequence capable of undergoing complementary bonding with molecules X of a target nucleic acid (which will hereinafter be simply called "the target nucleic acid X"). A preferred example of the linker L is one containing poly(T) of the same base sequence.

With reference to FIG. 5, a description will next be made of the manner of the complementary bonding between the linker L and the target nucleic acid X. When the linker L has a portion of the poly(T) base sequence as illustrated by way of example in FIG. 5, a poly(A) site of the target nucleic acid X undergoes complementary bonding with the poly(T) portion on the basis of the poly(A) selection process. A preferred example of the target nucleic acid X is an mRNA having a poly(A) tail extension.

In the hybrid-forming section 111, the target nucleic acid X is ready for hybridization while being held on the beads 22 via the linker L, and undergoes hybridization with molecules P of a complementary probe nucleic acid (which will hereinafter be simply called "the probe nucleic acid P") in the sample solution supplied into the hybrid-forming section 111. The manner of hybridization is illustrated in FIG. 6.

In FIG. 6, there is schematically illustrated a state that the probe nucleic acid P has hybridized with a single-stranded portion of the target nucleic acid X held on the bead 22 via the linker L to form a double-stranded portion.

As depicted in FIG. 6, the advance labeling of the probe nucleic acid P with a fluorescent substance F or a radioactive substance (not shown), which can be used for the detection of hybridization, makes it possible to detect the hybridization by capturing optical information or radiology information available from the labeling substance.

By holding, for example, an mRNA extracted from cells of a subject or the like on beads 22 via the linker L, such a hybridization assay can be used in a test or the like intended to determine whether or not the probe nucleic acid P having a base sequence associated with a known gene responsible for the development of a disease undergoes hybridization with the mRNA.

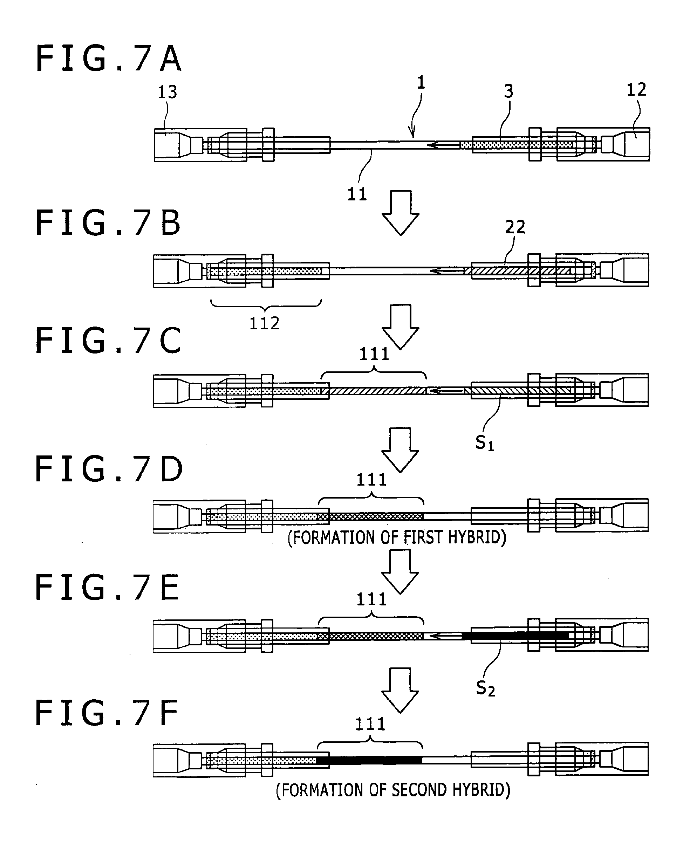

The above-described assay can be performed, for example, based on a process shown in the flow sheet of FIGS. 7A through 7F. In step 1 (FIG. 7A), the particles 3 such as perfusion chromatography particles, which serve to promote a fluid supply, are firstly injected toward a predetermined position in the capillary 11, which makes up the flow path system 1, to form the column-shaped fluid-supply promoting section 112.

In step 2 (FIG. 7B), the beads 22 with the linker L immobilized thereon are then packed toward an upstream side of the fluid-supply promoting section 112 to form the column-shaped hybrid-forming section 111.

Toward the hybrid-forming section 111 with the beads 22 packed therein, a first sample solution S₁ which contains the target nucleic acid P is then supplied in step 3 (FIG. 7C). At this time, the linker L (e.g., poly(T)) held on the beads 22 and the target nucleic acid X (for example, the poly(A) tail extension) complementarily bind each other (the formation of a first hybrid, step 4 (FIG. 7D)).

A second sample solution S₂ with the probe nucleic acid P contained therein is next supplied toward the hybrid-forming section 111 in step 5 (FIG. 7E). Hybridization is then allowed to proceed between the target nucleic acid X and the probe nucleic acid P at a predetermined temperature under predetermined pH conditions for a predetermined time (the formation of a second hybrid, step 6 (FIG. 7F)). Based on information available from the probe nucleic acid P at this time (for example, information on excited fluorescence from the labeling fluorescent substance), the hybridization is detected.

### Example 1

In Example 1, an investigation was made on the effects of the length of a bead bed packed in a hybrid-forming section, which formed a column layer in a microflow path system according to an embodiment of the present invention.

### <Fabrication of microcolumn>

As a capillary for the construction of the microflow path system, a fused silica capillary tube of 0.53 mm in inner diameter, 0.68 mm in outer diameter and 6 cm in length (product of GL Sciences, Inc.) was provided firstly.

An outlet portion fitted with a filter of 1-µm pore size and an inlet portion not fitted with any filter are attached to a downstream-side end portion and upstream-side end portion of the fused silica capillary tube by using tubing sleeves, ferrules and nuts, respectively. To the inlet portion on the upstream side, a fill port corresponding to a rheodyne syringe was fitted, and to the outlet portion on the downstream side, a luer lock needle was fitted.

### <Preparation of perfusion chromatography particles>

As perfusion chromatography particles, "POROS 20 R1" (commercial name, product of Applied Biosystems) was used. It was dispersed in a 10% ethanol solution to prepare a particle dispersion (hereinafter referred to as "the POROS dispersion").

### <Preparation of polynucleotide-bound microbeads>

A polynucleotide (21 mer) of deoxythymidine (dT) modified with biotin at the 5' end thereof was added to an aqueous dispersion of "STREPTAVIDIN COATED MICROSPHERE PLAIN" (trade name, diameter: 6 µm, product of Polysciences, Inc.) to prepare beads with poly(dT) immobilized thereon via avidin-biotin bonds (hereinafter called "the poly(dT) beads").

### <Formation of fluid-supply promoting section>

A syringe is attached to the luer lock needle on the outlet portion of the microcolumn. The rheodyne syringe with the "POROS dispersion" drawn therein was attached to the fill port at the inlet portion of the microcolumn. The plunger of the syringe fitted to the outlet portion was then pulled to inject the "POROS particles" as perfusion chromatography particles into the tube.

### <Leakage test of fluid-supply promoting section>

The injection amount of POROS was adjusted around 1.25 mg to fabricate a microcolumn having a bed of POROS alone. Ultrapure water was used as a fluid to be supplied, and was supplied up to a flow rate of 100 µL/min by successively raising the flow rate from 5 µL/min. On the downstream side, a drain flowed out corresponding to the respective flow rates. Leakage or the like was not observed.

### <Formation of hybrid-forming section>

Subsequently, the poly(dT) beads (1.3 mg) prepared by the above-described procedure were injected in a similar manner into the upstream side of the fluid-supply promoting section. The resulting bead bed length was 4 mm. By decreasing the injection amount of the poly(dT) beads, a microcolumn of 2-mm bead bed length was also formed.

### <Leakage test of hybrid-forming section>

Ultrapure water was supplied into the hybrid-forming section in a similar manner as in the case of the fluid-supply promoting section. Up to 100 µL/min, a drain flowed out corresponding to the respective flow rates. Leakage or the like was not observed.

### <Setting of microcolumn>

From the microcolumn fabricated as described above, the luer lock needle and fill port were detached. The microcolumn was then fixed on a heated plate as a stage in a fluorescence microscope. Provided are a capillary tube with a ferrule and nut attached on only one end thereof, another capillary tube with a ferrule and nut attached on each end thereof, a syringe pump, and a drain bottle.

Firstly, the capillary tube having the ferrule and nut on each end thereof was attached to the upstream-side inlet portion of the microcolumn. The ferrule and nut on the opposite side of the capillary tube were attached to the luer lock needle via an internal union, and were connected to the syringe to be set on the syringe pump. The capillary tube with the ferrule and nut attached on only one end thereof was next attached to the downstream side of the microcolumn, and the opposite side of the capillary tube was introduced into the drain bottle.

### <Leakage test>

The microcolumn set as described above was checked for leakage or the like during a fluid supply. Ultrapure water was supplied into the microcolumn, and the microcolumn was checked to determine any leakage. As a result, no leakage was determined.

### <Extraction of total RNA>

Using a "RNEASY PROTECT KIT" (trade name, product of Qiagen NV), a standard total RNA kit, total RNA was extracted with ultrapure water from HeLa cells cultured in a 10-cm dish to obtain an aqueous solution of total RNA.

### <Preparation of total RNA sample solution>

An aqueous solution of sodium chloride was added to the above-obtained aqueous solution of total RNA such that the concentration of sodium chloride reached a final concentration of 0.5 M.

### <Centrifugal filtration of total RNA sample solution>

Provided were centrifugal filter columns the filter pore sizes of which were 0.1 µm, 0.22 µm, 0.45 µm, 0.65 µm and 5 µm, respectively ("AMICON ULTRA MC" (trade name), products of Nihon Millipore K.K.). Centrifugal filtration was performed by using the filters in the decreasing order of filter pore size, and the final filtrate was provided as a sample solution.

### <Formation of hybrid between poly(dT) and poly(A) site in filtered sample of total RNA>

A 0.5 M aqueous solution of sodium chloride was passed through the microcolumn to replace the internal liquid phase of the microcolumn with the 0.5 M aqueous solution of sodium chloride. The above-prepared sample solution was collected in the syringe, and the syringe was connected to the luer lock needle on the capillary tube on the upstream side of the column. By the syringe pump, the sample solution was supplied as much as 300 µL to form a hybrid between poly(dT) and the poly(A) site in the filtered sample of total RNA. Subsequent to the supply of the sample solution, a 0.1% solution of sodium dodecylsulfate (SDS) in a 0.5 M aqueous solution of sodium chloride (700 µL) was supplied to wash the inside of the microcolumn.

### <Formation of probe-target complex>

Employed as a probe for β-actin was a polydeoxynucleotide, which had a sequence complementary to the sequence of the 21 bases close to the poly(A) tail extension of an mRNA and was labeled on the 5' side thereof with Cy3. For the determination of the sequence, DNA Data Bank of Japan (DDBJ) was used. The polydeoxynuclotide was dissolved in a 0.5 M aqueous solution of sodium chloride to prepare a 5 µM probe solution. The probe solution was collected in the syringe, and was supplied as much as 300 µL into the microcolumn in a similar manner as described above. Subsequent to the supply of the probe solution, a 0.1% solution of sodium dodecylsulfate (SDS) in a 0.5 M aqueous solution of sodium chloride (700 µL) was supplied to wash the inside of the microcolumn.

### <Measurement of complex formation>

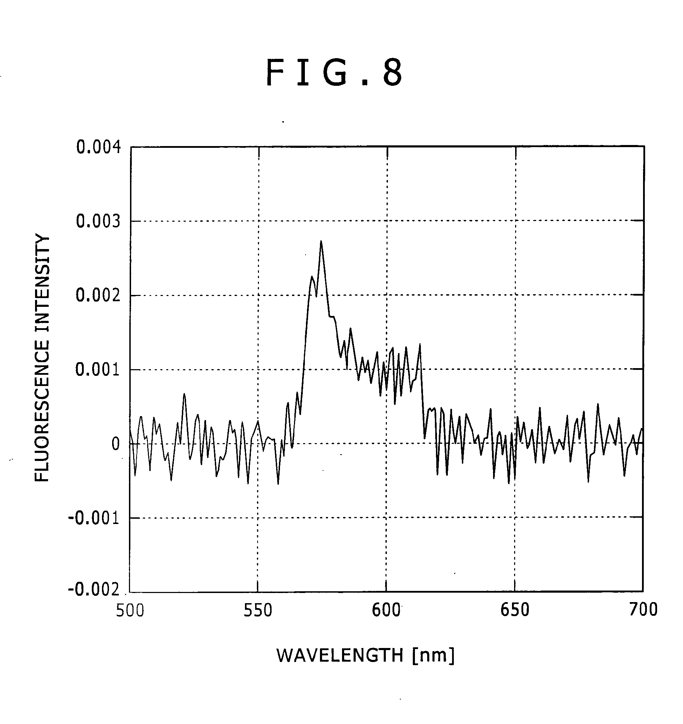

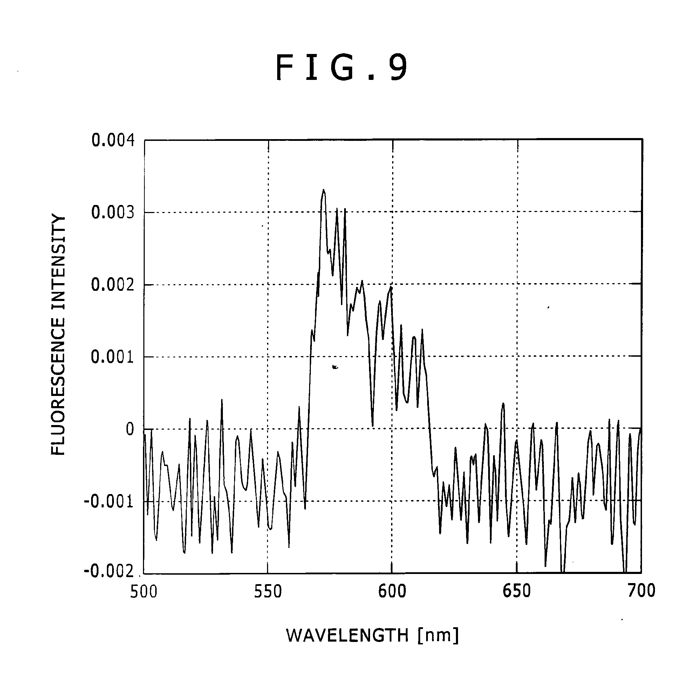

Fluorescence from Cy3 was measured by using a microspectroscopy system (manufactured by Otsuka Electronics Co., Ltd.) connected to a fluorescence microscope (manufactured by Nikon Instech Co., Ltd.) equipped with a Cy3 fluorescence filter, and was recorded as an amount of the complex formed. To eliminate effects of 0.1% sodium dodecylsulfate (SDS), a measurement was conducted by replacing the liquid phase with a 0.5 M aqueous solution of sodium chloride. The results of the measurement when the bead bed length of the poly(dT) beads in the hybrid-forming section was 4 mm are shown in FIG. 8, and the results of the measurement when the poly(dT) bead bed length was 2 mm are depicted in FIG. 9.

### <Results>

FIG. 8 and FIG. 9 show differences in fluorescence spectrum between before and after the supply of the probe solution. In each of FIG. 8 and FIG. 9, an increase in the fluorescence from Cy3 is clearly observed. As shown in FIG: 8 and FIG. 9, it has been found that the length of a bead bed does not affect a fluorometric measurement. It was also possible to confirm that in the case of the bead bed length of 2 mm, no leakage took place even by a fluid supply at 50 µL/min and the internal pressure was lower compared with the internal pressure in the case of the bead bed length of 4 mm.

It has been ascertained from Example 1 that the length of a bead bed packed in a hybrid-forming section formed in a column layer of a microflow path system according to an embodiment of the present invention may desirably be set at 4 mm or shorter, with 2 mm or shorter being more preferred. The internal pressure of a microflow path drops as the bead bed length becomes shorter. Further, the bead bed length is considered to give no problem or inconvenience to fluorometric measurements insofar as it is at least as long as the inner diameter of the microcolumn.

### Example 2

In Example 2, an investigation was made for a suitable filter pore size upon filtering a total RNA sample solution before it is passed through a microflow path system according to an embodiment of the present invention.

### <Centrifugal filtration of total RNA sample solution>

Similarly to Example 1, centrifugal filter columns the filter pore sizes of which were 0.1 µm, 0.22 µm, 0.45 µm, 0.65 µm and 5 µm, respectively ("AMICON ULTRA MC" (trade name), products of Nihon Millipore K.K.) were provided. When a total RNA sample solution prepared by a similar procedure as in Example 1 was subjected to centrifugal filtration by using the filters in the decreasing order of pore size, a residual solution was observed on each of the filters. In particular, the residual solution on the 0.65 µm filter was substantial. The final filtrate was provided as a filtered sample solution. As a control for comparison, the sample solution was used without filtration.

### <Observation of leakage>

A leakage status was observed when the filtered sample solution was supplied into the microcolumn set by a similar procedure as in Example 1 and also when the sample solution was supplied without filtration. The bead bed length of poly(dT) beads was set at 4 mm. The results of a leakage status against flow rate are shown in Table 1, in which "A", "B" and "C" indicate as follows. A: No leakage took place, B: Slight leakage took place although a fluid supply was feasible, and C: Leakage took place.

**[Table 1]**

| Flow rate (µL/min) | 2 | 5 | 10 | 20 | 50 |
|---|---|---|---|---|---|
| Filtered sample solution | A | A | B | B | B |
| Sample solution without filtration | B | B | B | C | C |

As shown in Table 1, it is appreciated that the filtered sample solution permitted its supply at a flow rate of 10 µL/min or higher although it occasionally developed slight leakage at the high flow rate of 50 µL/min. The sample solution without filtration, on the other hand, frequently developed leakage at connected parts or the like of the tubing when supplied at the high flow rate of 50 µL/min. A reduction in flow rate made it possible to perform its supply. To perform its supply without leakage, however, it was demanded to lower the flow rate beyond 5 µL/min to 2 µL/min in some instances.

It has been found from Example 2 that the filtration of a sample solution before its supply makes it possible to remove suspended substances from the sample solution and to prevent the clogging of a flow path. In the course of the centrifugal filtration of the sample solution, there was a substantial residual solution on the filter of 0.65 µm in pore size. It has, therefore, been found that the suitable pore size of the filter is 0.65 µm or smaller, with 0.1 µm or smaller being more preferred. The development of the slight leakage when the filtered sample solution was supplied at 50 µL/min may be considered to be attributable to a rise in internal pressure as a result of increased resistance in flow paths between beads by the mRNA subjected to poly(A) selection on the poly(dT) beads.

### Example 3

In Example 3, an investigation was made for possible leakage when the sample solution was supplied while performing depressurization on a downstream of a microflow path system according to an embodiment of the present invention.

### <Attachment of syringe>

By a similar procedure as in Example 1, a microcolumn was set, and a capillary tube with a ferrule and nut carried on the side of each end thereof was attached to the downstream side of the microcolumn. The downstream side of the capillary tube was connected to a syringe via an internal union and a luer lock needle.

### <Supply of sample solution and results>

The plunger of the syringe attached as described above was pulled. While maintaining the outlet side under a negative pressure, the sample solution was supplied. The bead bed length of poly(dT) beads was set at 4 mm. The results are shown in Table 2 in which similarly to Example 2, "A", "B" and "C" indicate as follows. A: No leakage took place, B: Slight leakage took place although a fluid supply was feasible, and C: Leakage took place. It has been found that as shown in Table 2, no leakage took place at the flow rates of 2, 5, 10 and 20 µL/min when the filtered sample solution was supplied, and a fluid supply at 20 µL/min or higher is feasible. When the sample solution was supplied without filtration, an improvement was also observed by pulling the plunger although the improvement was slight.

**[Table 2]**

| Flow rate (µL/min) | 2 | 5 | 10 | 20 | 50 |
|---|---|---|---|---|---|
| Filtered sample solution | A | A | A | A | B |
| Sample solution without filtration | B | B | B | B | C |

It has been found from Example 3 that a fluid supply at a still higher flow rate is feasible by depressurizing the downstream side of the microflow path system according to an embodiment of the present invention. This may be attributed presumably to an improvement in a flow of liquid phase as a result of the maintenance of a negative pressure on the downstream side although a pressure is built up on the upstream side by a fluid supply from an upstream.

It is to be noted that, when the suited length (2 mm) of the bead bed length as investigated in Example 1 and the depressurization in this example were used in combination, a tendency toward a further improved fluid supply was observed.

With the microflow path system according to an embodiment of the present invention, a high flow-rate fluid supply is feasible because it can prevent clogging in a microflow path and a rise in the internal pressure of the microflow path. The microflow path system according to an embodiment of the present invention can also be used effectively for supplying a total RNA sample which contains various suspended substances, long-chain nucleic acids and the like. As the formation of a hybrid is effected on the surfaces of beads packed within the microflow path, the efficiency of the reaction is high. By washing or otherwise cleaning the beads, the microflow path system according to an embodiment of the present invention can be used as a repeatedly-usable hybridization detector.

It should be understood by those skilled in the art that various modifications, combinations, subcombinations and alterations may occur depending on design requirements and other factors insofar as they are within the scope of the appended claims or the equivalents thereof.

## Claims

1. A microflow path system having a column layer of at least 0.5 mm in internal diameter, said column layer comprising:
a hybrid-forming section packed with beads to provide a bead bed length of not longer than 4 mm; and
a fluid-supply promoting section arranged in a region downstream of said hybrid-forming section to contribute to an increase in a flow rate of a fluid supply.

2. The microflow path system according to claim 1, wherein a sample fluid filtered through a filter of not greater than 0.65 µm in pore size is supplied.

3. The microflow path system according to claim 1 or 2, wherein said fluid-supply promoting section is packed with perfusion chromatography particles.

4. The microflow path system according to claim 1, 2 or 3, further comprising a device configured to perform depressurization on a downstream of said fluid-supply promoting section.

5. The microflow path system according to any preceding claim, wherein a nucleic acid is immobilized on said beads via a linker having a same base sequence.

6. The microflow path system according to claim 5,
wherein said same base sequence of said linker is poly(T), and
in said hybrid-forming section, there are conducted a first hybrid formation that said poly(T) and an mRNA having a poly(A) tail extension in a total RNA sample complementarily bind each other and a second hybrid formation that said mRNA and a probe nucleic acid complementarily bind each other.
